# NEUE EUROPÄISCHE PATENTSCHRIFT

(11) **EP 0 307 570 B2**
(45) Veröffentlichungstag und Bekanntmachung des Hinweises auf die Entscheidung über den Einspruch: **08.10.1997**
(45) Hinweis auf die Patenterteilung: 03.03.1993
(21) Anmeldenummer: 88111123.1
(22) Anmeldetag: 12.07.1988
(51) Int. Cl.: B60J 7/185

(54) **Verriegelungsvorrichtung für ein Verdeck**
Locking device for a vehicle top
Dispositif de verrouillage pour un capot de véhicule

(30) Priorität: 16.09.1987 DE 3731068
(43) Veröffentlichungstag der Anmeldung: 22.03.1989
(73) Patentinhaber: Dr.Ing.h.c. F. Porsche Aktiengesellschaft, 70435 Stuttgart (DE)
(72) Erfinder: Brin, Constantin, Dipl.-Ing., D-7000 Stuttgart 30 (DE)

(56) Entgegenhaltungen:
- DE-A- 1 728 284
- DE-B- 1 066 881
- DE-C- 3 413 379
- DE-U- 1 941 226

## Beschreibung

Die Erfindung bezieht sich auf eine Verriegelungsvorrichtung für ein Verdeck am Windschutzscheibenrahmen eines Kraftfahrzeuges, insbesondere für ein Klappverdeck, die einen verdeckseitig angeordneten Schwenkhebel und eine am Windschutzscheibenrahmen vorgesehene Aufnahme umfaßt, wobei der um eine etwa horizontal ausgerichtete Längsachse gelagerte Schwenkhebel mit einer Betätigungseinrichtung zusammenwirkt.

Aus der DE-C 34 13 379 ist eine, eine gute Funktion aufweisende Verriegelungsvorrichtung für ein Verdeck bekannt, die eine am Windschutzscheibenrahmen angeordnete, feststehende Kulissenführung und einen verdeckseitig angebrachten Schwenkhebel mit einem Verriegelungsbolzen umfaßt, wobei beim Schließvorgang der Verriegelungsbolzen mit der Kulissenführung zusammenwirkt und das Verdeck nach unten zieht. Für den Schwenkhebel ist entweder eine manuelle oder eine elektromotorische Betätigung vorgesehen.

Dieser Anordnung haftet der Nachteil an, daß für beide Betätigungen unterschiedliche Kulissenführungen erforderlich sind, wodurch die Herstellungskosten erhöht werden. Ferner lassen sich bei der manuellen Version aufgrund des Schwenkwinkels des Schwenkhebels und der Ausgestaltung der Führungskulisse nur geringe senkrechte Hubbewegungen realisieren, d. h, das Klappverdeck muß mit erheblichem Kraftaufwand von Hand so weit nach unten gezogen werden, bis die Verriegelungsbolzen in die Kulissenführungen eingreifen.

Darüber hinaus tritt die maximale Schließkraft des Verdecks in vertikaler Richtung (Vorspannung) bereits vor der Schließstellung des Verriegelungsbolzens auf, und zwar dann, wenn sich der Verriegelungsbolzen am untersten Punkt des oberen Bahnabschnittes der Kulissenführung befindet. In der Schließstellung hingegen rastet der Verriegelungsbolzen in eine Ausnehmung der Kulissenführung ein, wobei die Ausnehmung höher liegt als der unterste Punkt des oberen Bahnabschnittes.

Aufgabe der Erfindung ist es, eine Verriegelungsvorrichtung nach dem Oberbegriff zwischen einem Windschutzscheibenrahmen und einem vorderen Rahmenteil des Verdecks zu schaffen, die bei einfachem Aufbau eine gute Funktion aufweist und bei der auch bei manuell betätigtem Schwenkhebel große Hubbewegungen in vertikaler Richtung erzielbar sind. Ferner soll die in vertikaler Richtung wirkende Schließkraft des Verdecks in der Verriegelungsstellung ihren Maximalwert aufweisen.

Erfindungsgemäß wird diese Aufgabe durch die kennzeichnenden Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die Ausgestaltung der Aufnahme als drehbare Rolle und die Anordnung einer langgestreckten Führungsbahn am Schwenkhebel eine Verriegelungsvorrichtung geschaffen wird, die bei guter Funktion einen einfachen Aufbau aufweist. Außerdem wird durch die Führungsbahn auch bei manueller Betätigung des Schwenkhebels ein großer Hub in vertikaler Richtung erzielt. Durch die auf einer gemeinsamen vertikalen Ebene liegenden Drehpunkte des Schwenkhebels und der Rolle sowie die rechtwinkelige Anordnung der Führungsbahn zur vertikalen Hilfsebene wird in der Schließstellung die maximale Schließkraft in vertikaler Richtung (vertikale Vorspannung) erzielt, und zwar ohne Verlust an Hub. In der Schließstellung tritt keine horizontal wirkende Kraft zwischen der Führungsbahn und der Rolle auf. Ferner können mit dieser Verriegelungsvorrichtung in horizontaler Richtung große Toleranzen kompensiert werden. Die Arretiereinrichtung bewirkt eine zusätzliche Sicherung des Schwenkhebels in seiner Schließstellung und zeichnet sich durch eine gute Funktion aus.

Ein Ausführungsbeispiel der Erfindung ist in der Zeichnungen dargestellt und wird nachstehend näher erläutert.
Es zeigt
- Fig. 1: eine Teilseitenansicht eines Personenwagens mit einem Klappverdeck,
- Fig. 2: einen Längsschnitt durch eine Verriegelungsvorrichtung für das Klappverdeck in größerem Maßstab,
- Fig. 3: eine Ansicht in Pfeilrichtung R der Fig. 2 auf die Verriegelungsvorrichtung
- Fig. 4: einen Schnitt nach der Linie IV-IV der Fig. 3,
- Fig. 5: eine Teilansicht der Fig. 3, wobei die Verriegelungsvorrichtung ihre Entriegelungsstellung einnimmt,
- Fig. 6: eine Teilansicht der Fig. 3, mit einer Zwischenstellung der Verriegelungsvorrichtung,
- Fig. 7: eine Teilansicht der Fig. 3 mit der Verriegelungsstellung der Verriegelungsvorrichtung,
- Fig. 8: eine Ansicht in Pfeilrichtung S der Fig. 2 auf das Verriegelungsorgan der Verriegelungsvorrichtung,
- Fig. 9: eine perspektivische Ansicht der Bauteile des Verriegelungsorgans, jedoch ohne die Grundplatte,
- Fig. 10: eine Einzelheit X der Fig. 3 in größerem Maßstab,
- Fig. 11: eine Ansicht auf die beiden Nocken der Arretiereinrichtung gemäß Fig. 10,
- Fig. 12: ein Diagramm, das den Kräfteverlauf während des Veriegelungsvorgangs des Verdecks zeigt.

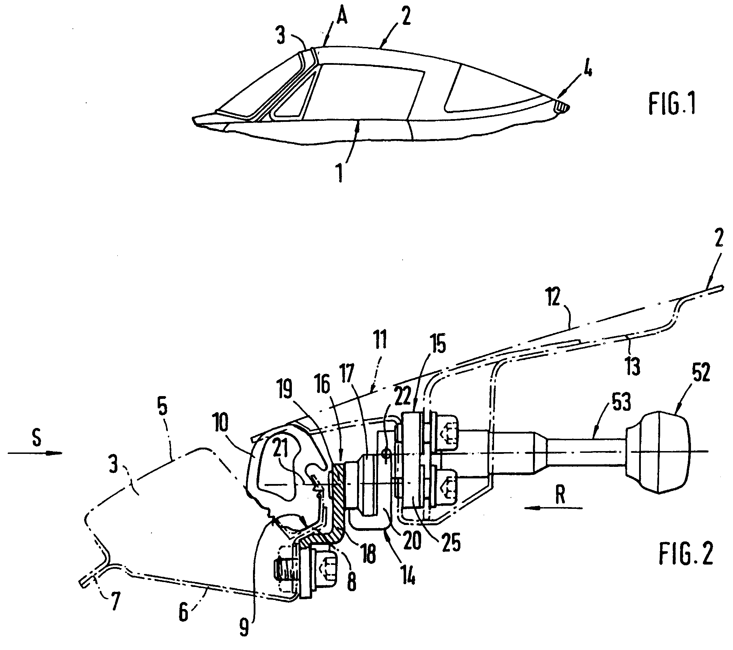

Der in Fig. 1 dargestellte Teilbereich eines Personenwagens weist oberhalb einer Gürtellinie 1 ein Klappverdeck 2 auf, das sich in seiner geschlossenen Stellung A zwischen einem Windschutzscheibenrahmen 3 und einem Heckbereich 4 erstreckt und lösbar am Windschutzscheibenrahmen 3 in Lage gehalten ist. Der Windschutzscheibenrahmen 3 setzt sich aus zwei Profilteilen 5 und 6 zusammen, die an gleichgerichteten Flanschen 7 und 8 durch Schweißen miteinander verbunden sind (Fig. 2). Das Profilteil 5 weist eine U-förmige Rinne 9 auf, in die ein Dichtkörper 10 eingesetzt ist, auf dem ein Randbereich eines vorderen Rahmenteiles 11 des Klappverdecks 2 aufliegt. Das querverlaufende vordere Rahmenteil 11 setzt sich aus Blechpreßteilen 12, 13 zusammen, die örtlich durch Schweißen, Kleben oder dergleichen miteinander verbunden sind.

Zur Fixierung des Klappverdecks 2 am Windschutzscheibenrahmen 3 ist beiderseits einer Mittellängsebene jeweils eine Verriegelungsvorrichtung 14 vorgesehen. In den Fig. 2 bis 11 ist jeweils die in Fahrtrichtung gesehen linke Seite der Verriegelungsvorrichtung 14 dargestellt. Jede Verriegelungsvorrichtung 14 umfaßt ein am vorderen Rahmenteil 11 des Verdecks 2 angeordnetes Verriegelungsorgan 15 und eine am Windschutzscheibenrahmen 3 vorgesehene Aufnahme 16.

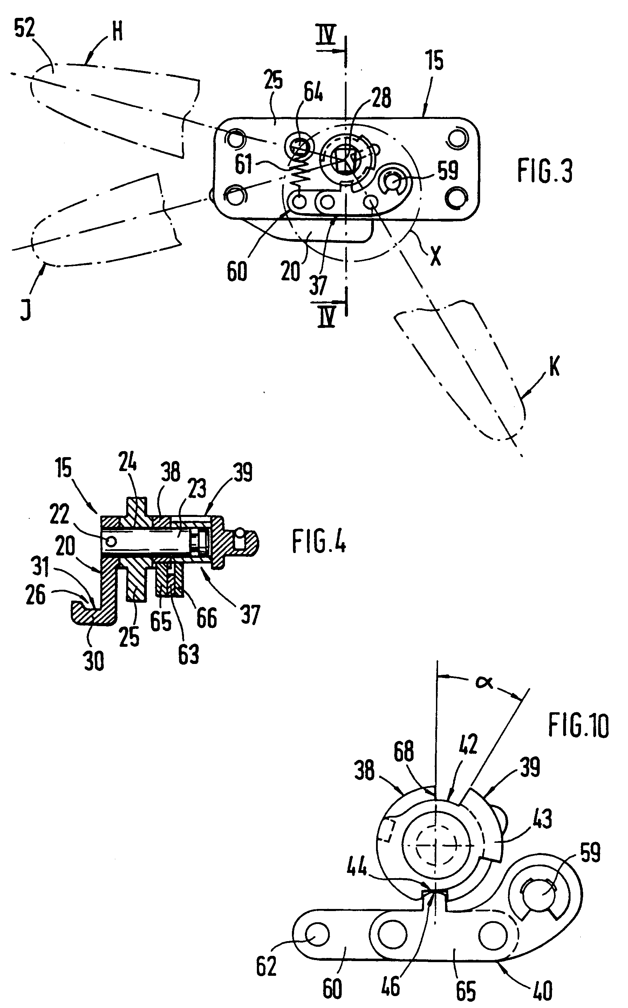

Gemäß Fig. 2 wird die Aufnahme 16 durch eine drehbare Rolle 17 gebildet, die unter Zwischenschaltung eines zweifach abgewinkelten Halters 18 am Windschutzscheibenrahmen 3 befestigt ist. Die Rolle 17 ist am oberen Ende eines aufrechten Steges 19 des Halters 18 angeordnet und einem Schwenkhebel 20 des Verriegelungsorganes 15 zugekehrt. Die aufrecht verlaufende Rolle 17 ist um eine etwa horizontale Längsachse 21 drehbar gelagert. Der Schwenkhebel 20 ist mittels eines Stiftes 22 mit einer etwa horizontal ausgerichteten, sich in Fahrzeuglängsrichtung erstreckenden Welle 23 verbunden (Fig. 4). Die Welle 23 ist in einem zylindrischen Aufnahmeabschnitt 24 einer Grundplatte 25 drehbar aufgenommen, wobei die aufrecht verlaufende Grundplatte 25 am vorderen Rahmenteil 11 des Verdecks 2 in Lage gehalten ist. Der Schwenkhebel 20 ist auf der der Rolle 17 zugekehrten Seite der Grundplatte 25 angeordnet.

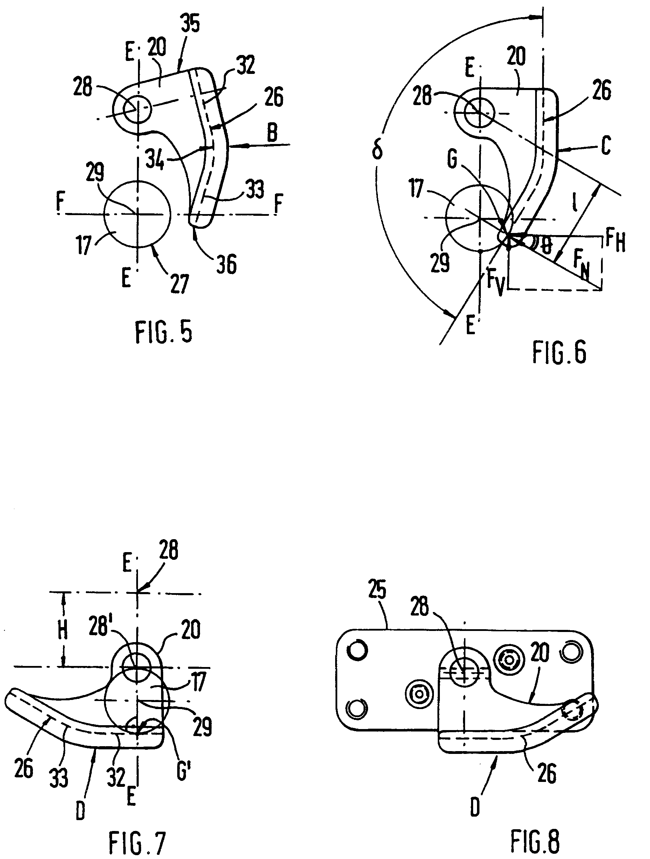

Die am Windschutzscheibenrahmen 3 angeordnete Rolle 17 wirkt mit einer am Schwenkhebel 20 vorgesehenen, langgestreckten Führungsbahn 26 dergestalt zusammen, daß beim Verriegeln des Verdecks 2 die Führungsbahn 26 von einer seitlich neben der Rolle 17 sich erstreckenden Entriegelungsstellung B (Fig. 5) über Zwischenstellungen (z. B. C) um den unteren Bereich 27 der Rolle 17 herum in eine unterhalb der Rolle 17 liegende Verriegelungsstellung D (Fig. 7) bewegt wird. Der Drehpunkt 28 des Schwenkhebels 20 und der Drehpunkt 29 der Rolle 17 liegen dabei auf einer gemeinsamen, vertikalen Hilfsebene E-E, wobei beim Verriegeln der obere Drehpunkt 28 des Schwenkhebels 20 auf der Ebene E-E um das Maß H (= Hub) nach unten wandert (Fig. 7) und eine Position 28' einnimmt. In der Verriegelungsstellung D ist der die Rolle 17 tangierende Bereich der Führungsbahn 26 rechtwinkelig zur Hilfsebene E-E ausgerichtet.

Die Führungsbahn 26 verläuft mit Abstand zum Drehpunkt 28 des Schwenkhebels 20 und erstreckt sich in der Entriegelungsstellung B gesehen, etwa über die gesamte Höhe des Schwenkhebels 20. Gemäß Fig. 5 ist die Führungsbahn 26 an dem der Hilfsebene E-E abgekehrten Endbereich des Schwenkhebels 20 vorgesehen und wird durch eine etwa senkrecht zum Schwenkhebel 20 verlaufende Abstellung 30 gebildet, wobei eine Innenseite 31 der Abstellung 30 mit der Rolle 17 zusammenwirkt. Entsprechend Fig. 4 ist die Führungsbahn 26 im Querschnitt gesehen nutförmig ausgebildet, wodurch der Schwenkhebel 20 in Längsrichtung durch die Rolle 17 fixiert ist.

Die Führungsbahn 26 besteht zur Erzielung eines gleichmäßigen Hubes H in senkrechter Richtung aus zwei winkelig aneinandergesetzten, geradlinigen Abschnitten 32, 33, wobei die beiden Abschnitte 32, 33 über einen radienförmigen Übergangsbereich 34 miteinander verbunden sind (Fig. 5).

Die beiden Abschnitte 32, 33 schließen einen stumpfen Winkel δ miteinander ein, der im Ausführungsbeispiel etwa 150° beträgt. Der erste Abschnitt 32 ist etwa rechtwinkelig zu einer oberen Begrenzungskante 35 des Schwenkhebels 20 angeordnet. In der Entriegelungsstellung B befindet sich die Führungsbahn 26 seitlich neben der Rolle 17, wobei sich die Führungsbahn 26 mit Abstand zur Rolle erstreckt und das freie untenliegende Ende 36 der Führungsbahn 26 etwa in Höhe einer horizontalen Ebene F-F durch den Mittelpunkt der Rolle 17 verläuft. Nach einem Schwenkweg von etwa 15° (Zwischenstellung C) liegt der Abschnitt 33 der Führungsbahn 26 seitlich an der Rolle 17 an und tangiert diese (Fig. 6). Der Abschnitt 32 ist dabei etwa vertikal ausgerichtet. In dieser Zwischenstellung C beginnt das Zusammenwirken von Führungsbahn 26 und Rolle 17. Der Abschnitt 33 der Führungsbahn 26 verläuft dabei tangential zur Rolle 17 und berührt diese in einem Punkt G. In der Zwischenstellung C wirkt im Berührungspunkt G eine Reaktionskraft F_{N}, die sich in eine vertikale Kraft F_{V} und eine horizontale Kraft F_{H} verlegen läßt.

Beim Bewegen des Schwenkhebels 20 von der Zwischenstellung C in die Verriegelungsstellung D wird die Führungsbahn 26 um den unteren Abschnitt 27 der Rolle 17 herumbewegt, wobei der Drehpunkt 28 des Schwenkhebels 20 nach unten in seine Endlage 28' wandert. Der Berührungspunkt G bewegt sich dabei im Uhrzeigersinn und nimmt in der Verriegelungsstellung D die Position G' ein. In der Verriegelungsstellung D wirkt die Rolle 17 mit einem Endbereich des Abschnittes 32 zusammen, wobei der Abschnitte 32 rechtwinkelig zur Hilfsebene E-E ausgerichtet ist. Die vertikale Kraft F_{V} wird beim Bewegen des Schwenkhebels 20 von der Zwischenstellung C in die Verriegelungsstellung D immer größer und erreicht in der Verriegelungsstellung D ihren Maximalwert, wobei dann die Kraft F_{V} der Kraft F_{N} entspricht. Die horizontale Kraft F_{H} wird hingegen immer kleiner und weist in der Verriegelungsstellung D den Wert Null auf. In der Verriegelungsstellung D nimmt der Schwenkhebel 20 eine Totpunktlage ein.

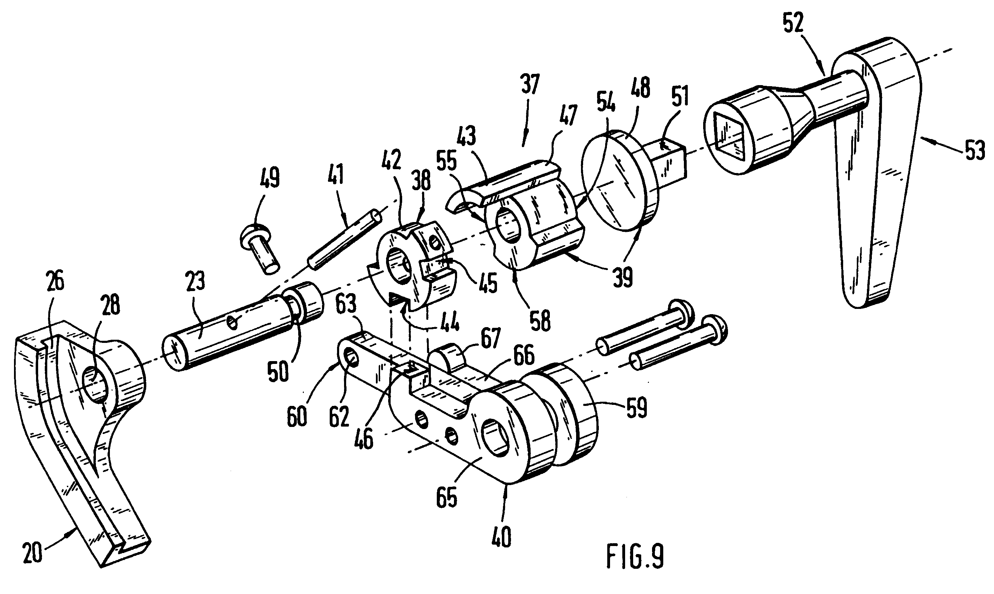

Zur zusätzlichen Sicherung des Schwenkhebeles 20 in seiner Verriegelungsstellung D ist am Verriegelungsorgan 15 eine Arretiereinrichtung 37 vorgesehen, die einen ersten feststehenden Nocken 38 und einen zweiten drehbeweglichen Nocken 39 umfaßt, wobei die beiden Nocken 38, 39 mit einem federbelasteten Verriegelungshaken 40 zusammenwirken (Fig. 4 und 9). Der feststehende Nocken 38 ist mittels eines Stiftes 41 auf der Welle 23 fixiert und befindet sich auf der dem Schwenkhebel 20 abgekehrten Seite der Grundplatte 25. Gemäß Fig. 9 weist der Nocken 38 eine umfangsseitige Ausnehmung 42 für einen Mitnehmer 43 des drehbeweglichen Nockens 39 sowie zwei U-förmige Aussparungen 44, 45 auf, die um den Winkel β versetzt zueinander angeordnet sind. Die beiden Aussparungen 44, 45 wirken mit einer ersten rechteckförmigen Raste 46 des Verriegelungshakens 40 zusammen. Die Ausnehmung 42 ist an beiden Endbereichen kantig ausgebildet.

Der drehbewegliche Nocken 39 ist aus Herstellungsgründen zweiteilig ausgebildet, wobei die Teile 47, 48 durch Schweißen fest miteinander verbunden sind (Fig. 9). Entsprechend Fig. 4 ist der drehbewegliche Nocken 39 angrenzend an den feststehenden Nocken 38 angeordnet, wobei der Mitnehmer 43 den feststehenden Nocken 38 übergreift und mit der Ausnehmung 42 zusammenwirkt. Zur axialen Fixierung des Nocken 39 ist ein Stift 49 vorgesehen, der in eine radiale Einkerbung 50 der Welle 23 eingreift. Das Teil 48 des Nockens 39 verläuft - in axialer Richtung gesehen - neben der Welle 23 und weist endseitig einen Vierkant 51 auf, auf den ein Handgriff 52 einer Betätigungseinrichtung 53 aufsteckbar ist. Es besteht aber auch die Möglichkeit, anstelle der manuellen Betätigungseinrichtung eine motorische Betätigungseinrichtung 53 vorzusehen (nicht dargestellt).

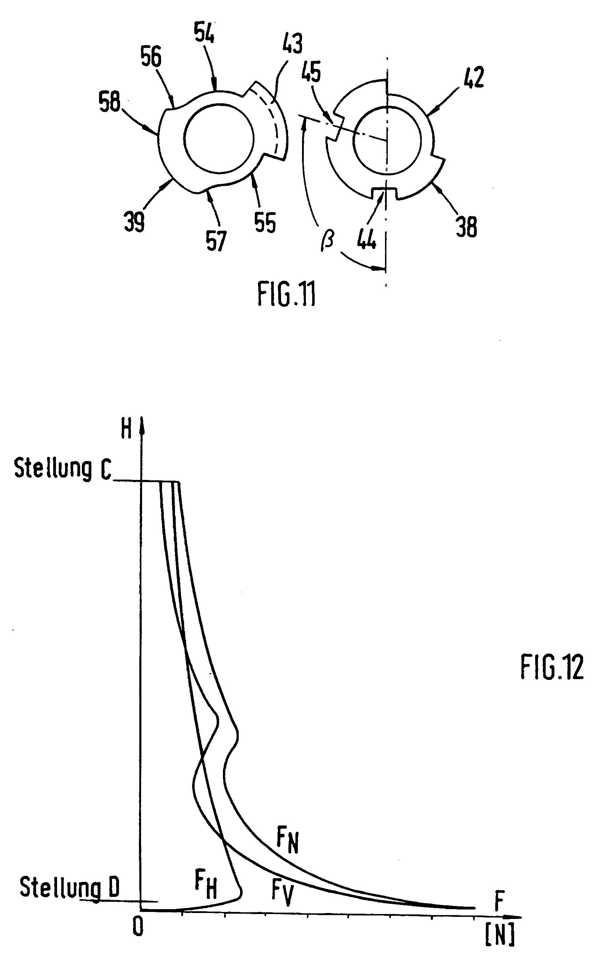

Gemäß Fig. 9 weist der drehbewegliche Nocken 39 beiderseits des Mitnehmers 43 Ausnehmungen 54, 55 auf, wobei der Übergang vom Mitnehmer 43 zu den Ausnehmungen 54, 55 scharfkantig ausgebildet ist. Auf der dem Mitnehmer abgekehrten Seite sind beide Ausnehmungen 54, 55 über nockenförmige Bereiche 56, 57 an einen vorstehenden Abschnitt 58 angeschlossen (Fig. 11). Dieser Abschnitt 58 weist einen geringfügig kleineren Außendurchmesser auf als der Außendurchmesser des Mitnehmers 43.

Der Verriegelungshaken 40 ist unterhalb der Welle 23 angeordnet und mit seinem einen hochgezogenen Ende 59 drehbar an der Grundplatte 25 gelagert. (Fig. 3 und 10). Das andere Ende 60 des Verriegelungshakens 40 wirkt mit einer Zugfeder 61 zusammen. Ein Ende der Zugfeder ist in einer Öffnung 62 eines Mittelstückes 63 des Verriegelungshakens 40 eingehängt, wogegen das andere Ende mit einem oberhalb des Drehpunktes 28 des Schwenkhebels 20 liegenden Bolzens 64 zusammenwirkt (Fig. 3).

Der Verriegelungshaken 40 setzt sich aus dem Mittelstück 63 und zwei Außenteilen 65, 66 zusammen, die durch Schraube, Niete oder dergleichen mit dem Mittelstück 63 verbunden sind. An dem der Grundplatte 25 zugekehrten Außenteil 65 ist die rechteckförmig Raste 46 angebracht, während am anderen Außenteil 66 eine halbkreisförmige Raste 67 angeordnet ist. Die beiden Rasten 46, 67 fluchten - in Querrichtung gesehen - miteinander.

In Schließstellung der Verriegelungsvorrichtung 14 nimmt der Handgriff 52 eine Stellung H und der Schwenkhebel 20 die Stellung D ein. Ferner greift die rechteckförmige Raste 46 in die korrespondierende Aussparung 44 des feststehenden Nockens 38 ein (Fig. 3 und 7).

Zum Entriegeln der Verriegelungsvorrichtung 14 wird der Handgriff 52 um etwa 30° (Winkel α) nach unten in eine Stellung J verschwenkt, wodurch der Mitnehmer 43 des Nockens 39 in Eingriff mit dem Rand 68 der Ausnehmung 42 des feststehenden Nockens 38 steht. Gleichzeitig wirkt beim Verschwenken des Nockens 39 die halbkreisförmige Raste 67 mit dem nockförmigen Bereich 57 des Nockens 39 zusammen und der Verriegelungshaken 40 wird durch den nockenförmigen Bereich 57 soweit nach unten bewegt, daß die rechteckförmige Raste 46 außer Eingriff mit der Aussparung 44 des feststehenden Nockens 38 gelangt. In der Stellung J des Handgriffes 52 befindet sich der Schwenkhebel 20 immer noch in seiner Verriegelungsstelung D. Durch weiteres Verschwenken des Handgriffes 52 in eine Lage K wird der Schwenkhebel 20 von der Verriegelungsstellung D über Zwischenstellungen (z. B. C) in die Entriegelungsstellung B bewegt und das Klappverdeck 2 kann nach hinten in seine zurückgeklappte Stellung gebracht werden.

## Patentansprüche

1. Verriegelungsvorrichtung für ein Verdeck am Windschutzscheibenrahmen eines Kraftfahrzeuges, insbesondere für ein Klappverdeck, die einen verdeckseitig angeordneten Schwenkhebel und eine am Windschutzscheibenrahmen vorgesehene Aufnahme umfaßt, wobei der um eine etwa horizontal ausgerichtete Längsachse gelagerte Schwenkarm mit einer Betätigungseinrichtung zusammenwirkt; dadurch gekennzeichnet, daß die Aufnahme (16) durch eine drehbare Rolle (17) gebildet wird, die mit einer am Schwenkhebel (20) vorgesehenen Führungsbahn (26) zusammenwirkt, dergestalt, daß beim Schließvorgang die Führungsbahn (26) von einer seitlich neben der Rolle verlaufenden Entriegelungsstellung (B) um den unteren Bereich (27) der Rolle (17) herum über Zwischenstellungen (z. B. C) in eine unterhalb der Rolle (17) liegende Verriegelungsstellung (D) bewegt wird, wobei die Drehpunkte (28, 29) des Schwenkhebels (20) und der Rolle (17) auf einer gemeinsamen, etwa vertikal verlaufenden Hilfsebene (E-E) angeordnet sind und beim Schließvorgang der obenliegende Drehpunkt (28) des Schwenkhebels (20) auf der vertikalen Ebene (E-E) nach unten wandert und daß in der Verriegelungsstellung (D) der die Rolle tangierende Bereich der Führungsbahn (26) rechtwinkelig zur vertikalen Hilfsebene (E-E) ausgerichtet ist,
daß sich die Führungsbahn (26) aus zwei stumpfwinkelig aneinandergesetzten, geradlinig ausgebildeten Abschnitten (32, 33) zusammensetzt, wobei die beiden Abschnitte (32, 33) über einen radienförmigen Übergangsbereich (34) miteinander verbunden sind, und
daß der Schwenkhebel (20) zusätzlich durch eine an der Welle (23) des Schwenkhebels (20) angreifende Arretiereinrichtung (37) in seiner Verriegelungsstellung (D) in Lage gehalten ist.

2. Verriegelungsvorrichtung nach Anspruch 1, dadurch gekennzeichnet, daß die Rolle (17) um eine etwa horizontal ausgerichtete Längsachse (21) drehbar gelagert ist.

3. Verriegelungsvorrichtung nach den Ansprüchen 1 und 2, dadurch gekennzeichnet, daß die Rolle (17) unter Zwischenschaltung eines Halters (18) am Windschutzscheibenrahmen (3) befestigt ist.

4. Verriegelungsvorrichtung nach Anspruch 1, dadurch gekennzeichnet, daß die Führungsbahn (26) mit Abstand zum Drehpunkt (28) des Schwenkhebels (20) verläuft und sich in der Entriegelungsstellung (B) über die gesamte Höhe des Schwenkhebels (20) erstreckt.

5. Verriegelungsvorrichtung nach Anspruch 4, dadurch gekennzeichnet, daß die Führungsbahn (26) nutförmig ausgebildet ist und beim Zusammenwirken mit der Rolle (17) diese - Längsrichtung gesehen - formschlüssig umgreift.

6. Verriegelungsvorrichtung nach Anspruch 1, dadurch gekennzeichnet, daß die Arretiereinrichtung (37) einen ersten feststehenden Nocken (38) und einen zweiten drehbeweglichen Nocken (39) umfaßt, wobei die beiden Nocken (38, 39) mit einem federbelasteten Verriegelungshaken (40) in Wirkverbindung stehen.

7. Verriegelungsvorrichtung nach Anspruch 6, dadurch gekennzeichnet, daß ein Mitnehmer (43) des drehbeweglichen Nockens (39) mit einer Ausnehmung (42) des feststehenden Nockens (38) zusammenwirkt, wobei der Nocken (39) um einen Winkel (α) relativbeweglich zum Nocken (38) ist.

8. Verriegelungsvorrichtung nach den Anspruchen 1, 6 und 7, dadurch gekennzeichnet, daß am Verriegelungshaken (40) eine rechteckförmige Raste (46) und eine halbkreisförmige Raste (67) angeordnet sind, wobei die rechteckförmige Raste (46) in eine korrespondierende Aussparung (44) des feststehenden Nockens (38) eingreift und hierdurch den Schwenkhebel (20) in seiner Verriegelungsstellung (D) fixiert.

9. Verriegelungsvorrichtung nach Anspruch 8, dadurch gekennzeichnet, daß beim Verschwenken eines Handgriffs (52) von einer Stellung (H) in eine Stellung (J) die halbkreisförmige Raste (67) des Verriegelungshakens (40) mit einem nockenförmigen Bereich (57) des drehbeweglichen Nockens (39) zusammenwirkt und den Verriegelungshaken (40) nach unten bewegt, wodurch die rechteckförmige Raste (46) außer Eingriff mit der Aussparung (44) gelangt.

## Claims

1. A locking device for a cover on the windscreen frame of a motor vehicle, in particular for a folding cover, comprising a pivotal lever arranged on the cover and a receiving means provided on the windscreen frame, wherein the pivotal arm mounted [pivotably] about a longitudinal axis orientated substantially horizontally cooperates with an actuating device, **characterized in that** the receiving means (16) is formed by a rotatable roller (17) coperating with a guide path (26) provided on the pivotal lever (20), in such a way that during closure the guide path (26) is moved from an unlocked position (**B**) extending laterally adjacent to the roller by way of intermediate positions (for example **C**) around the lower region (27) of the roller (17) into a locked position (**D**) lying below the roller (17), wherein the fulcra (28, 29) of the pivotal lever (20) and of the roller (17) are arranged on a common auxiliary plane (**E-E**) extending substantially vertically and during closure the upper fulcrum (28) of the pivotal lever (20) moves downwards in the vertical plane (**E-E**), and in the locked position (**D**) the area of the guide path (26) in contact with the roller is orientated at right angles to the vertical auxiliary plane (**E-E**), the guide path (26) comprises two rectilinear portions (32, 33) joined at an obtuse angle, wherein the two portions (32, 33) are connected together by way of a radius-shaped transition region (34), and the pivotal lever (20) is additionally held in place in its locked position (**D**) by a catch device (37) engaging on the shaft (23) of the pivotal lever (20).

2. A locking device according to Claim 1, **characterized in that** the roller (17) is mounted so as to be rotatable about a longitudinal axis (21) orientated substantially horizontally.

3. A locking device according to Claims 1 and 2, **characterized in that** the roller (17) is secured to the windscreen frame (3) with the interposition of a holder (18).

4. A locking device according to Claim 1, **characterized in that** the guide path (26) extends at a distance from the fulcrum (28) of the pivotal lever (20) and in the unlocked position (**B**) extends over the entire height of the pivotal lever (20).

5. A locking device according to Claim 4, **characterized in that** the guide path (26) is in the form of a groove and when cooperating with the roller (17) engages around the latter in a positively locking manner as viewed in the longitudinal direction.

6. A locking device according to Claim 1, **characterized in that** the catch device (37) comprises a first stationary cam (38) and a second rotatably movable cam (39), wherein the two cams (38, 39) are operatively connected by a spring-loaded locking hook (40).

7. A locking device according to Claim 6, **characterized in that** an entrainment means (43) of the rotatably movable cam (39) cooperates with a recess (42) in the stationary cam (38), wherein the cam (39) is movable relative to the cam (38) by an angle (**α**).

8. A locking device according to Claims 1, 6 and 7, **characterized in that** a rectangular catch (46) and a semicircular catch (67) are arranged on the locking hook (40), wherein the rectangular catch (46) engages in a corresponding opening (44) in the stationary cam (38) and thereby fixes the pivotal lever (20) in its locked position (**D**).

9. A locking device according to Claim 8, **characterized in that** when a handle (52) is pivoted from one position (**H**) into a position (**J**) the semicircular catch (67) of the locking hook (40) cooperates with a cam-shaped area (57) of the rotatably movable cam (39) and moves the locking hook (40) downwards, as a result of which the rectangular catch (46) disengages from the opening (44).

## Revendications

1. Dispositif de verrouillage d'une capote, sur le cadre de pare-brise d'un véhicule automobile, en particulier d'une capote rabattable, qui comporte un levier de pivotement placé côté capote et un logement prévu sur le cadre de pare-brise, le bras de pivotement monté autour d'un axe longitudinal orienté à peu près horizontalement, coopérant avec un dispositif d'actionnement, caractérisé en ce que le logement (16) est formé par un galet (17) tournant qui coopère avec une voie de guidage (26) prévue sur le levier de pivotement (20), de telle sorte que lors de la fermeture, la voie de guidage (26) est déplacée d'une position de déverrouillage (B), s'étendant à côté du galet, autour de la zone inférieure (27) du galet (17), en passant par des positions intermédiaires (par ex. C), dans une position de verrouillage (D) située au-dessous du galet (17), les points de rotation (28, 29) du levier de pivotement (20) et du galet (17) se situant sur un plan auxiliaire (E-E) commun, à peu près vertical et, lors de la fermeture, le point de rotation (28) supérieur du levier de pivotement (20) se déplace vers le bas, sur le plan vertical (E-E), en ce que, dans la position de verrouillage (D), la zone, tangente au galet, de la voie de guidage (26) est orientée à angle droit par rapport au plan auxiliaire (E-E) vertical, en ce que la voie de guidage (26) est composée de deux parties (32, 33) rectilignes, juxtaposées de manière à former un angle obtu, les deux parties (32, 33) étant reliées entre elles par une zone de transition (34) en forme de rayon et en ce que le levier de pivotement (20) est en plus maintenu dans sa position de verrouillage (D) par un dispositif de blocage (37) attaquant l'arbre (23) du levier de pivotement (20).

2. Dispositif de verrouillage selon la revendication 1, caractérisé en ce que le galet (17) est monté tournant autour d'un axe longitudinal (21) à peu près horizontal.

3. Dispositif de verrouillage selon les revendications 1 et 2, caractérisé en ce que le galet (17) est fixé sur le cadre de pare-brise (3), par l'intermédiaire d'un support (18).

4. Dispositif de verrouillage selon la revendication 1, caractérisé en ce que la voie de guidage (26) s'étend à une certaine distance du point de rotation (28) du levier de pivotement (20) et, en position de déverrouillage (B), s'étend sur toute la hauteur du levier de pivotement (20).

5. Dispositif de verrouillage selon la revendication 4, caractérisé en ce que la voie de guidage (26) est en forme de rainure et, par coopération avec le galet (17), entoure celui-ci, vu dans la direction longitudinale, par concordance de forme.

6. Dispositif de verrouillage selon la revendication 1, caractérisé en ce que le dispositif de blocage (37) comporte une première came (38) fixe et une deuxième came (39) mobile en rotation, les deux cames (38, 39) étant en liaison active avec un crochet de verrouillage (40) soumis à l'action d'un ressort.

7. Dispositif de verrouillage selon la revendication 6, caractérisé en ce qu'un entraîneur (43) de la came (39) mobile en rotation coopère avec une découpe (42) de la came fixe (38), la came (39) pouvant se déplacer par rapport à la came (38), d'un angle (α).

8. Dispositif de verrouillage selon les revendications 1, 6 et 7, caractérisé en ce qu'il est prévu sur le crochet de verrouillage (40), un organe d'arrêt (46) rectangulaire et un organe d'arrêt (67) semi-circulaire, l'organe d'arrêt (46) rectangulaire s'engageant dans une découpe (44) correspondante de la came (38) fixe et fixant ainsi le levier de pivotement (20) dans sa position de verrouillage (D).

9. Dispositif de verrouillage selon la revendication 8, caractérisé en ce que lors du pivotement d'une poignée (52) d'une position (H) à une position (J), le dispositif d'arrêt (67) semi-circulaire du crochet de verrouillage (40) coopère avec une zone (57) en forme de came de la came (39) mobile en rotation et déplace vers le bas le crochet de verrouillage (40), ce qui fait que le dispositif d'arrêt (46) rectangulaire se dégage de la découpe (44).
